# FASCICULE DE BREVET EUROPEEN

(11) **EP 3 526 945 B1**
(45) Date de publication et mention de la délivrance du brevet: **24.03.2021**
(21) Numéro de dépôt: 17778269.5
(22) Date de dépôt: 03.10.2017
(51) Int. Cl.: H04L 29/06

(54) **SYSTÈME DE COMMUNICATION À RÉCEPTEUR DE CONTENU PROPRE À GÉRER UN APPEL PENDANT UNE DIFFUSION, ET PROCÉDÉ DE GESTION ASSOCIÉ**
KOMMUNIKATIONSSYSTEM MIT INHALTSEMPFÄNGER ZUR VERWALTUNG EINES ANRUFS WÄHREND EINES RUNDFUNKS UND ENTSPRECHENDES VERFAHREN ZUR VERWALTUNG VON
COMMUNICATION SYSTEM WITH CONTENT RECEIVER ABLE TO MANAGE A CALL DURING A BROADCAST, AND ASSOCIATED METHOD DE MANAGEMENT

(30) Priorité: 14.10.2016 FR 1659983
(43) Date de publication de la demande: 21.08.2019
(73) Titulaire: Sagemcom Broadband SAS, 92500 Rueil-Malmaison (FR)
(72) Inventeur: COFFINET, Arnaud, 92500 Rueil Malmaison (FR)
(74) Mandataire: Cabinet Camus Lebkiri
(86) Numéro de dépôt international: PCT/EP2017/075059
(87) Numéro de publication internationale: WO 2018/069088

(56) Documents cités:
- EP-A1- 1 624 679
- US-A1- 2008 140 818

## Description

L'invention concerne les systèmes de communication qui comprennent une passerelle couplée à un récepteur de contenus multimédia, et plus précisément la gestion des appels téléphoniques qui sont reçus par de tels systèmes de communication pendant la diffusion de contenus multimédia.

Comme le sait l'homme de l'art, certains systèmes de communication, d'une part, comprennent une passerelle de communication (ou « gateway ») couplée à un récepteur de contenus multimédia également couplé à un moniteur et disposant de moyens d'enregistrement propres à enregistrer un contenu en cours de réception, et, d'autre part, couplé à un téléphone fixe et/ou à un téléphone mobile. Généralement la passerelle (de communication) est couplée au téléphone fixe, à un fournisseur de service Internet (ou ISP), et éventuellement à des moyens de fourniture de contenus (câble et/ou fibre optique et/ou antenne de télévision et/ou parabole satellitaire), et le récepteur de contenus multimédia est couplé à un moniteur d'affichage (comme par exemple un téléviseur ou un écran d'ordinateur) et à au moins un téléphone mobile (par exemple via une liaison Bluetooth).

On notera que l'invention concerne aussi bien les systèmes de communication dans lesquels la passerelle et le récepteur de contenus multimédia font partie d'un même appareil, que les systèmes de communication dans lesquels la passerelle et le récepteur de contenus multimédia sont deux appareils couplés via une liaison filaire ou non filaire. On notera également que le récepteur de contenus multimédia peut, par exemple, être ce que l'homme de l'art appelle en anglais une « Personal Video Recorder Set Tob Box » (ou PVR STB), avec une fonction de décodeur.

Plusieurs systèmes de communication connus proposent une fonction permettant de détecter un appel (téléphonique) entrant pendant la diffusion d'un contenu sur le moniteur associé, et de lancer un enregistrement de ce contenu dans le récepteur (de contenus multimédia) consécutivement à cette détection d'appel, soit automatiquement, soit à la requête de l'usager. Cependant aucun de ces systèmes de communication ne propose une gestion des appels entrants depuis le récepteur (et notamment une acceptation ou un refus ou raccrocher). De surcroît, la plupart de ces systèmes de communication doivent comporter un périphérique additionnel pour procéder à la détection des appels entrants. Un tel système est par exemple décrit dans la publication US 2008/0140818.

Certes la société Apple a proposé une gestion d'appel, mais sans possibilité d'enregistrement du contenu (ou programme multimédia) regardé. Les appels doivent obligatoirement passer par une application appelée FaceTime® et ne peuvent être reçus que sur un ordinateur personnel ou un téléphone intelligent de type iPhone ou une tablette électronique de type iPad ou un téléviseur via l'application appelée AppleTV®. En d'autres termes, la mise en œuvre de la seule gestion d'appel impose obligatoirement d'avoir des appareils de la marque Apple.

L'invention a donc notamment pour but d'améliorer la situation.

Elle propose notamment à cet effet un procédé destiné à permettre la gestion d'un appel téléphonique entrant pour un système de communication comprenant une passerelle (de communication) couplée à un récepteur de contenus multimédia qui est également couplé à un moniteur et qui dispose de moyens d'enregistrement propres à enregistrer un contenu en cours de réception, ce système de communication étant en outre couplé à un téléphone fixe et/ou à un téléphone mobile.

Ce procédé se caractérise par le fait qu'il comprend une étape dans laquelle, en cas de détection d'un appel téléphonique entrant par le système de communication pendant une diffusion d'un contenu par le moniteur :
- on interrompt temporairement cette diffusion tout en enregistrant avec les moyens d'enregistrement la suite du contenu reçue par le système de communication, et on affiche sur le moniteur un message proposant à un usager de ce dernier d'accepter ou de refuser cet appel téléphonique entrant détecté, puis, en cas d'acceptation, on poursuit l'enregistrement de la suite du contenu reçue avec les moyens d'enregistrement jusqu'à ce que l'on détecte la fin de l'appel téléphonique.

Ainsi, on peut immédiatement mettre « en pause » et enregistrer le contenu (ou programme) qui est diffusé en direct lors de la réception d'un appel téléphonique tout en étant capable de gérer cet appel téléphonique depuis le récepteur sans ajout d'un périphérique additionnel.

Le procédé de gestion selon l'invention peut comporter d'autres caractéristiques qui peuvent être prises séparément ou en combinaison, et notamment :
- dans son étape, lorsque l'on a détecté la fin de l'appel téléphonique, on peut afficher sur le moniteur un message proposant à l'usager la diffusion par ce dernier de la suite du contenu en cours de réception ou de la suite du contenu enregistrée tout en continuant l'enregistrement de la suite du contenu reçue ;
- dans son étape, en cas de refus de l'usager de répondre à l'appel téléphonique entrant, on peut afficher sur le moniteur un message proposant à cet usager la diffusion par ce dernier de la suite du contenu en cours de réception ou de la suite du contenu enregistrée tout en continuant l'enregistrement de la suite du contenu reçue ;
- dans son étape le système de communication peut considérer que l'usager accepte l'appel téléphonique entrant lorsqu'il a sélectionné une zone d'acceptation affichée sur le moniteur au moyen d'une télécommande associée au récepteur de contenus multimédia ou une touche dédiée de cette télécommande ou qu'il a pris l'appel téléphonique entrant au moyen du téléphone fixe ou mobile qui a reçu ce dernier ;
   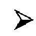 dans son étape, lorsque l'usager accepte l'appel téléphonique entrant au moyen de la télécommande, on peut diffuser les sons issus du téléphone fixe ou mobile au moyen du moniteur ou d'un périphérique audio rattaché au moniteur et on peut capter les sons émis par l'usager avec un microphone de la télécommande afin de les transférer vers le téléphone fixe ou mobile (qui a reçu l'appel téléphonique).

L'invention propose également un système de communication comprenant une passerelle (de communication) couplée à un récepteur de contenus multimédia qui est propre à être couplé à un moniteur (d'affichage) et qui comporte des moyens d'enregistrement propres à enregistrer un contenu en cours de réception, ce système de communication étant en outre propre à être couplé à un téléphone fixe et/ou à un téléphone mobile.

Ce système de communication se caractérise par le fait qu'il comprend également des moyens de contrôle agencés, en cas de détection d'un appel téléphonique entrant (par le système de communication) pendant une diffusion d'un contenu par le moniteur :
- pour déclencher une interruption temporaire de cette diffusion et un enregistrement par les moyens d'enregistrement de la suite du contenu reçue par le système de communication, et pour déclencher un affichage sur le moniteur d'un message proposant à un usager de ce dernier d'accepter ou de refuser cet appel téléphonique entrant détecté, puis
- en cas d'acceptation de cet appel téléphonique entrant, pour imposer une poursuite de l'enregistrement de la suite du contenu reçue par les moyens d'enregistrement jusqu'à une détection de fin de l'appel téléphonique.

Le système de communication selon l'invention peut comporter d'autres caractéristiques qui peuvent être prises séparément ou en combinaison, et notamment :
- ses moyens de contrôle peuvent être agencés, lorsqu'une fin de l'appel téléphonique a été détectée, pour déclencher un affichage sur le moniteur d'un message proposant à l'usager la diffusion par ce dernier de la suite du contenu en cours de réception ou de la suite du contenu enregistrée tout en imposant une poursuite de l'enregistrement de la suite du contenu reçue ;
- ses moyens de contrôle peuvent être agencés, en cas de refus de l'usager de répondre à l'appel téléphonique entrant, pour déclencher un affichage sur le moniteur d'un message proposant à cet usager la diffusion par ce dernier de la suite du contenu en cours de réception ou de la suite du contenu enregistrée tout en imposant une poursuite de l'enregistrement de la suite du contenu reçue ;
- il peut également comprendre une télécommande associée au récepteur de contenus multimédia. Dans ce cas, ses moyens de contrôle peuvent être agencés pour considérer que l'usager accepte l'appel téléphonique entrant lorsqu'il a sélectionné une zone d'acceptation affichée sur le moniteur au moyen d'une télécommande associée au récepteur de contenus multimédia ou une touche dédiée de cette télécommande ou qu'il a pris l'appel téléphonique entrant au moyen du téléphone fixe ou mobile qui a reçu ce dernier ;
   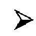 la télécommande peut comprendre un microphone propre à capter des sons émis par l'usager, et ses moyens de contrôle peuvent être agencés, lorsque l'usager a accepté l'appel téléphonique entrant au moyen de la télécommande, pour contrôler la diffusion des sons issus du téléphone fixe ou mobile (ayant reçu l'appel téléphonique) au moyen du moniteur ou d'un périphérique audio rattaché au moniteur et le transfert vers ce téléphone fixe ou mobile des sons captés par le microphone ;
- dans un premier mode de réalisation sa passerelle et son récepteur de contenus multimédia peuvent faire partie d'un même appareil propre à être couplé au moniteur et au téléphone fixe et/ou au téléphone mobile ;
- dans un second mode de réalisation sa passerelle peut être couplée au récepteur de contenus multimédia via une liaison filaire ou non filaire et peut être propre à être couplée au téléphone fixe, et son récepteur de contenus multimédia peut être propre à être couplé au moniteur et au téléphone mobile ;
- ses moyens de contrôle peuvent faire partie du récepteur de contenus multimédia.

L'invention propose également un récepteur de contenus multimédia, d'une part, propre à être couplé à un téléphone mobile, un moniteur et une passerelle (de communication) propre à être couplée à un téléphone fixe, et, d'autre part, comportant des moyens d'enregistrement propres à enregistrer un contenu en cours de réception. Ce récepteur se caractérise par le fait qu'il comprend des moyens de contrôle agencés, en cas de détection d'un appel téléphonique entrant reçu par le téléphone mobile ou le téléphone fixe pendant une diffusion d'un contenu par le moniteur, pour déclencher une interruption temporaire de la diffusion et un enregistrement par les moyens d'enregistrement de la suite du contenu reçue, et pour déclencher un affichage sur le moniteur d'un message proposant à un usager de ce dernier d'accepter ou de refuser l'appel téléphonique entrant détecté, puis, en cas d'acceptation, pour imposer une poursuite de l'enregistrement de la suite du contenu reçue par les moyens d'enregistrement jusqu'à une détection de fin de l'appel téléphonique.

L'invention propose également un produit programme d'ordinateur comprenant des instructions qui, lorsque le programme est exécuté par un ordinateur, conduisent celui-ci à mettre en œuvre les étapes du procédé selon une combinaison possible des étapes précédemment énoncées.

L'invention a également pour objet un support d'enregistrement non transitoire lisible par ordinateur comprenant des instructions qui, lorsqu'elles sont exécutées par un ordinateur, conduisent celui-ci à mettre en œuvre les étapes du procédé selon une combinaison possible des étapes précédemment énoncées.

D'autres caractéristiques et avantages de l'invention apparaîtront à l'examen de la description détaillée ci-après, et des dessins annexés, sur lesquels :
- la figure 1 illustre de façon schématique et fonctionnelle un premier exemple de réalisation d'un système de communication selon l'invention, et
- la figure 2 illustre de façon schématique et fonctionnelle un second exemple de réalisation d'un système de communication selon l'invention.

L'invention a notamment pour but de proposer un procédé de gestion destiné à permettre la gestion d'un appel téléphonique entrant pour un système de communication SC comprenant une passerelle (de communication) PC couplée à un récepteur de contenus multimédia RC, pendant la diffusion d'un contenu multimédia.

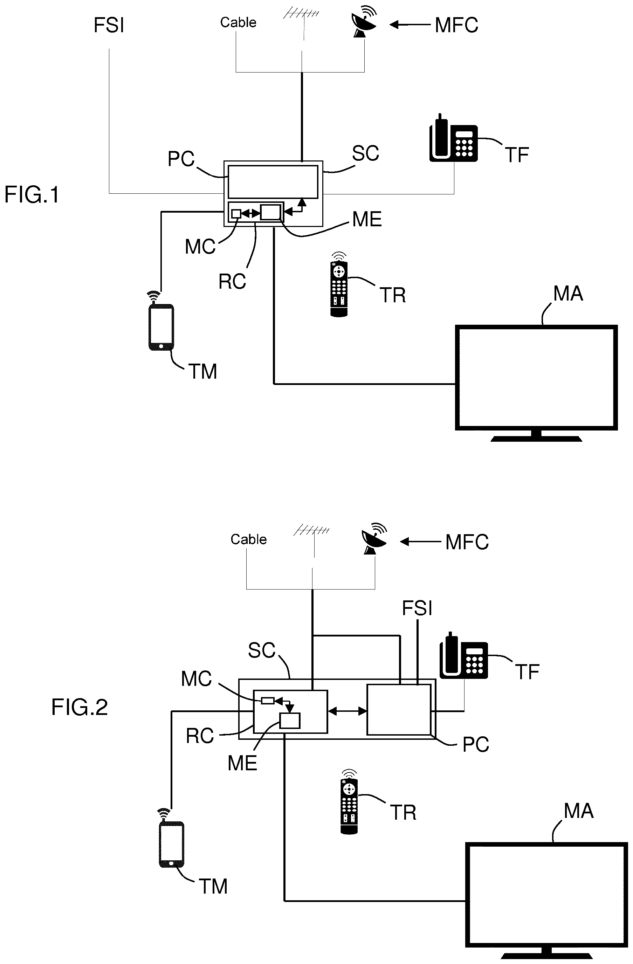

On a schématiquement illustré sur les figures 1 et 2 deux exemples de réalisation d'un système de communication SC selon l'invention auquel sont couplés, à titre d'exemple non limitatif, un moniteur (d'affichage) MA, un téléphone fixe TF, un téléphone mobile TM, des moyens de fourniture de contenus multimédia MFC, et un fournisseur de service Internet (ou ISP) FSI.

On notera qu'afin que l'invention puisse être mise en œuvre, il suffit que le système de communication SC soit couplé à un téléphone fixe (TF) ou mobile (TM) et à un moyen de fourniture de contenus multimédia MFC.

Dans les exemples illustrés non limitativement, le moniteur (d'affichage) MA est un téléviseur. Mais il pourrait également s'agir d'un écran d'ordinateur (fixe ou portable).

Par ailleurs, les moyens de fourniture de contenus multimédia MFC peuvent, par exemple, comprendre un câble réseau Ethernet et/ou une fibre optique et/ou une antenne de télévision et/ou une parabole satellitaire et/ou une arrivée de câble (par exemple de type DVB-C / DVB C2 ou toute autre norme de diffusion sur réseau câblé).

Comme illustré, un système de communication SC, selon l'invention, comprend au moins une passerelle PC, un récepteur de contenus multimédia RC et des moyens de contrôle MC.

La passerelle (ou gateway) PC peut être de type résidentiel ou domestique. Elle est couplée au téléphone fixe TF ainsi qu'à l'éventuel fournisseur de service Internet FSI et éventuellement au(x) moyen(s) de fourniture de contenus multimédia MFC.

Le récepteur (de contenus multimédia) RC est couplé au téléphone mobile TM, au moniteur MA et au(x) moyen(s) de fourniture de contenus multimédia MFC. Le couplage entre le récepteur RC et le moniteur MA peut se faire par une liaison filaire (de type vidéo numérique ou vidéo analogique) ou par une liaison non filaire. Par ailleurs, ce récepteur RC comprend des moyens d'enregistrement ME qui sont propres à enregistrer en direct un contenu (multimédia) qui est en cours de réception par son système de communication SC.

Par exemple, le récepteur RC peut être une « Personal Video Recorder Set Tob Box » (ou PVR STB), avec une fonction de décodeur.

Dans le premier exemple de réalisation, la passerelle PC et le récepteur RC font partie d'un même appareil au sein duquel ils sont couplés par une liaison filaire ou non filaire. On est donc en présence d'un appareil tout intégré. On notera que la passerelle PC et le récepteur RC pourraient être intégrés sous la forme d'un unique équipement électronique, ou bien être réalisés sous la forme d'un logiciel tournant sur un microprocesseur commun.

Dans le second exemple de réalisation, la passerelle PC et le récepteur RC sont deux appareils qui sont distants l'un de l'autre et couplés via une liaison filaire (par exemple de type LAN (« Local area Network » - réseau local) ou non filaire (par exemple de type WAN (« Wireless Area Network » - réseau local non filaire).

Comme évoqué précédemment, l'invention propose un procédé de gestion destiné à gérer les appels téléphoniques entrants dans le système de communication SC pendant qu'un contenu (multimédia) en cours de réception par ce dernier (SC) est diffusé en direct par le moniteur MA.

Un tel procédé peut être mis en œuvre au moins partiellement par les moyens de contrôle MC du système de communication SC. Dans les exemples non limitatifs illustrés sur les figures 1 et 2, les moyens de contrôle MC font partie du récepteur RC. Mais cela n'est pas obligatoire. En effet, et bien que cela ne soit pas préféré, ils pourraient constituer un équipement couplé au récepteur RC. Par conséquent, les moyens de contrôle MC peuvent être réalisés sous la forme de modules logiciels (ou informatiques ou encore « software »), ou bien d'une combinaison de circuits électroniques (ou « hardware ») et de modules logiciels. On notera que la gestion du téléphone mobile TM nécessite que le récepteur RC ait une fonctionnalité Bluetooth avec profil HF.

Un procédé de gestion, selon l'invention, comprend une étape qui est mise en œuvre chaque fois qu'un appel (téléphonique) entrant est détecté, pendant la diffusion d'un contenu par le moniteur MA, par le système de communication SC. Cette détection est réalisée par la passerelle PC si l'appel (téléphonique) entrant concerne le téléphone fixe TF. S'il concerne le téléphone mobile TM, la détection de l'appel est réalisée par ce dernier (TM), mais ce dernier (TM) transmet l'alerte de l'appel entrant au récepteur RC. On peut donc dire que le récepteur RC ne fait que notifier l'appel entrant.

Dans cette étape, lorsque la condition précitée survient, on interrompt temporairement (ou met en pause) la diffusion tout en enregistrant avec les moyens d'enregistrement ME la suite du contenu reçue par le système de communication SC (via les moyens de fourniture de contenus MFC), et on affiche sur le moniteur MA un message proposant à un usager de ce dernier (MA) d'accepter ou de refuser l'appel entrant détecté.

On comprendra que ce sont les moyens de contrôle MC qui sont agencés pour déclencher l'interruption temporaire de la diffusion et l'enregistrement par les moyens d'enregistrement ME de la suite du contenu reçue par le système de communication SC, et pour déclencher l'affichage sur le moniteur MA du message proposant à l'usager d'accepter ou de refuser l'appel entrant détecté.

Ensuite dans cette étape, en cas d'acceptation de l'appel par l'usager, on poursuit l'enregistrement de la suite du contenu reçue avec les moyens d'enregistrement ME jusqu'à ce que l'on détecte la fin de cet appel.

On notera qu'une fois la fin de l'appel détectée on peut ensuite afficher sur le moniteur MA un message proposant à l'usager la diffusion par ce dernier (MA) de la suite du contenu en cours de réception par le système de communication SC ou de la suite du contenu enregistrée par les moyens d'enregistrement ME tout en continuant l'enregistrement de la suite du contenu reçue via les moyens de fourniture de contenus MFC. Mais cette diffusion pourrait être automatique dès la détection de la fin de l'appel ou bien consécutive à un ordre fourni par l'usager.

On comprendra que ce sont les moyens de contrôle MC qui sont agencés pour imposer la poursuite de l'enregistrement de la suite du contenu reçue par les moyens d'enregistrement ME jusqu'à la détection de la fin de l'appel, puis, éventuellement, pour déclencher l'affichage sur le moniteur MA du message proposant à l'usager la diffusion de la suite du contenu en cours de réception ou de la suite du contenu enregistrée tout en imposant la poursuite de l'enregistrement de la suite du contenu reçue.

L'invention permet donc, immédiatement après la détection d'un appel entrant, de mettre en pause le contenu (ou programme) qui est diffusé en direct sur le moniteur MA, et de débuter l'enregistrement de la suite de ce contenu (ou programme) tout en gérant cet appel depuis le récepteur RC sans qu'il faille obligatoirement ajouter un périphérique additionnel et sans intervention de l'usager. Le récepteur RC devient donc, en quelque sorte, un dispositif de type « mains libres ».

On notera que la détection de l'appel entrant est très rapide du fait qu'elle est réalisée dans la passerelle PC ou dans le téléphone mobile TM. De ce fait, on n'a plus besoin d'attendre la sonnerie du téléphone et sa détection pour agir. Cette détection peut, par exemple, se faire par notifications de messages SIP (« Session Initiation Protocol ») si l'appel provient du téléphone fixe TF, ou par notifications de messages Bluetooth si l'appel provient du téléphone mobile TM.

Par exemple, dans l'étape du procédé, en cas de refus de l'usager de répondre à l'appel entrant, on peut afficher sur le moniteur MA un autre message proposant à cet usager la diffusion par ce dernier (MA) de la suite du contenu en cours de réception par le système de communication SC ou de la suite du contenu enregistrée par les moyens d'enregistrement ME tout en continuant l'enregistrement de la suite du contenu reçue via les moyens de fourniture de contenus MFC.

On comprendra que ce sont les moyens de contrôle MC qui sont agencés pour déclencher l'affichage sur le moniteur MA de cet autre message tout en imposant la poursuite de l'enregistrement de la suite du contenu reçue.

Egalement par exemple, dans l'étape du procédé le système de communication SC peut considérer que l'usager accepte l'appel entrant lorsqu'il a sélectionné une zone d'acceptation affichée sur le moniteur MA au moyen d'une télécommande TR qui est associée au récepteur RC ou une touche dédiée de cette télécommande TR ou qu'il a pris l'appel entrant au moyen du téléphone fixe TF ou mobile TM qui a reçu ce dernier.

On comprendra que ce sont les moyens de contrôle MC qui sont agencés pour réaliser cette considération.

En présence de la dernière option, lorsque l'usager accepte l'appel entrant au moyen de la télécommande TR, on peut diffuser les sons qui sont issus du téléphone fixe TF ou mobile TM (qui reçoit l'appel) au moyen des haut-parleurs du moniteur MA ou d'un périphérique audio rattaché au moniteur MA, et on peut capter les sons émis par l'usager avec un microphone que comprend la télécommande TR afin de les transférer vers ce téléphone fixe TF ou mobile TM.

On comprendra que ce sont les moyens de contrôle MC qui sont agencés pour contrôler la diffusion des sons issus du téléphone fixe TF ou mobile TM et le transfert des sons captés par le microphone vers le téléphone fixe TF ou mobile TM.

Afin de pouvoir véhiculer le flux audio capté par son microphone, la télécommande TR peut, par exemple, être de type Bluetooth.

La passerelle PC et le récepteur RC peuvent s'échanger des informations de type « événement » sur l'appel en cours, par exemple en utilisant un protocole de communication réseau de type Ethernet ou WiFi. A titre d'exemple, ce protocole peut être SIP. Afin de permettre cet échange d'informations et de flux audio, on peut, par exemple, créer un réseau local virtuel (ou VLAN (« Virtual LAN »)) entre la passerelle PC et le récepteur RC. Le VLAN sera de préférence interne à l'appareil dans le premier exemple de réalisation (tout intégré), et externe en passant par la liaison (LAN ou WAN) entre la passerelle PC et le récepteur RC dans le second exemple de réalisation.

Lorsque les options décrites ci-avant sont présentes, le récepteur RC est donc en mesure de gérer l'appel entrant en proposant à l'usager sur le moniteur MA les options suivantes, accessibles notamment au moyen de la télécommande TR :
- accepter l'appel en mode mains libres, qu'il provienne du téléphone fixe TF ou du téléphone mobile TM,
- refuser l'appel et reprendre le visionnage du contenu (ou programme) là où il a été interrompu consécutivement à la détection d'appel,
- refuser l'appel et ne pas reprendre la lecture du contenu (ou programme).

Par ailleurs, les moyens de contrôle MC peuvent éventuellement être agencés pour déclencher l'affichage sur le moniteur MA du nom ou du numéro de téléphone de l'appelant et/ou de la durée de la communication.

De plus, le récepteur RC gérant l'appel, il détecte automatiquement la fin de l'appel et donc peut immédiatement et automatiquement proposer à l'usager la reprise ou non de la lecture du contenu (ou programme), par affichage de message(s) sur le moniteur MA.

On notera également que la télécommande TR associée au récepteur RC peut être éventuellement enrichie d'une ou plusieurs touches de fonction dédiées à la téléphonie (pour prendre l'appel et pour refuser l'appel). Mais on pourrait également utiliser les touches de défilement et de sélection de la télécommande TR pour choisir les options de gestion de téléphonie affichées sur le moniteur MA.

Trois situations pouvant être gérées par les moyens de contrôle MC sont décrites ci-après à titre d'exemples.

Dans un premier exemple l'usager regarde un programme sur le moniteur MA via le récepteur RC en ayant son téléphone fixe TF hors de sa portée, à moins de se déplacer. Lorsque son téléphone fixe TF reçoit un appel, les moyens de contrôle MC en sont informés et déclenchent automatiquement la mise en pause de la diffusion du programme et l'enregistrement de la suite de ce dernier, puis déclenchent l'affichage sur le moniteur MA d'un message indiquant qu'un appel provenant de Mr X est en cours sur le téléphone fixe TF. Par exemple, l'usager peut se déplacer pour décrocher son téléphone fixe TF. Dans ce cas, les moyens de contrôle MC peuvent déclencher l'affichage sur le moniteur MA d'un message indiquant que l'appel a été pris et la durée de la communication. Une fois l'appel terminé les moyens de contrôle MC en sont informés par la passerelle PC et peuvent proposer à l'usager de reprendre le visionnage de son programme là où il avait été interrompu ou de reprendre la diffusion du programme en direct.

Dans un deuxième exemple l'usager regarde un programme sur le moniteur MA via le récepteur RC en ayant éventuellement son téléphone mobile TM hors de sa portée, à moins de se déplacer. Lorsque son téléphone mobile TM reçoit un appel, les moyens de contrôle MC en sont informés et déclenchent automatiquement la mise en pause de la diffusion du programme et l'enregistrement de la suite de ce dernier, puis déclenchent l'affichage sur le moniteur MA d'un message indiquant qu'un appel provenant de Mr X est en cours sur le téléphone mobile TM. Par exemple, l'usager ne veut pas répondre à l'appelant et le signale via la télécommande TR associée au récepteur RC. Dans ce cas, les moyens de contrôle MC déclenchent le rejet de l'appel puis l'affichage sur le moniteur MA d'un message proposant à l'usager de reprendre le visionnage de son programme là où il avait été interrompu ou de reprendre la diffusion du programme en direct.

Dans un troisième exemple l'usager regarde un programme sur le moniteur MA via le récepteur RC en ayant éventuellement son téléphone mobile TM hors de sa portée, à moins de se déplacer. Lorsque son téléphone mobile TM reçoit un appel, les moyens de contrôle MC en sont informés et déclenchent automatiquement la mise en pause de la diffusion du programme et l'enregistrement de la suite de ce dernier, puis déclenchent l'affichage sur le moniteur MA d'un message indiquant qu'un appel provenant de Mr X est en cours sur le téléphone mobile TM. Par exemple, l'usager veut répondre à l'appelant et le signale via la télécommande TR associée au récepteur RC. Dans ce cas, les moyens de contrôle MC contrôlent la diffusion de la voix de l'appelant par les haut-parleurs du moniteur MA et le transfert de la voix de l'usager (captée par le microphone de la télécommande TR) vers le téléphone mobile TM, via le récepteur RC. Pendant la communication, les moyens de contrôle MC peuvent déclencher l'affichage sur le moniteur MA d'un message indiquant que l'appel a été pris et la durée de la communication. Une fois l'appel terminé les moyens de contrôle MC en sont informés par le récepteur RC et peuvent proposer à l'usager de reprendre le visionnage de son programme là où il avait été interrompu ou de reprendre la diffusion du programme en direct.

On notera qu'à tout moment l'usager peut interrompre la diffusion de la suite d'un contenu enregistrée par action sur l'une au moins des touches de la télécommande TR, afin de reprendre la diffusion de ce contenu en direct ou de changer de contenu.

On notera également que dans le cas d'une liaison Bluetooth entre le récepteur RC et le téléphone mobile TM, la configuration de cette liaison peut être réalisée comme indiqué ci-après. Tout d'abord on peut activer dans le récepteur RC et dans le téléphone mobile TM un profil dit mains libres (ou « Hands-Free Profile »). Le récepteur RC est alors considéré comme une unité mains libres (ou « Hand Free Unit »), et le téléphone mobile TM est considéré comme une unité de passerelle audio (ou « Audio Gateway unit »). Ensuite, les récepteur RC et téléphone mobile TM peuvent être appairés et une connexion de niveau de service (ou « Service Level Connection ») est établie entre eux afin que la fonctionnalité mains libres puisse être disponible.

On notera également que dans le cas d'un appel de type VOIP (« Voice Over IP »), il est nécessaire d'établir une connexion réseau Ethernet entre le récepteur RC et la passerelle PC et d'utiliser un protocole permettant de gérer l'appel. A cet effet, on peut, par exemple, créer un réseau virtuel de type VLAN entre le récepteur RC et la passerelle PC afin de router les données, comme indiqué plus haut. Le protocole utilisé peut être SIP. Le récepteur RC peut alors être vu comme un nouveau téléphone VOIP en plus de celui qui est déjà couplé à la passerelle PC. Au niveau SIP, le téléphone fixe TF relié à la passerelle PC et le récepteur RC sont alors considérés comme des serveurs d'agent utilisateur (ou « User Agent Server »), et l'appelant est considéré comme un client d'agent utilisateur (ou « User Agent Client »). Afin que l'appelant puisse adresser simultanément les deux serveurs d'agent utilisateur RC et TF, la passerelle PC doit également faire office de proxy SIP. Par ailleurs, le récepteur RC doit également intégrer la fonctionnalité de serveur d'agent utilisateur. Pour que la fonctionnalité soit active, chaque User Agent devra avoir réussi au préalable le processus d'enregistrement auprès du serveur proxy SIP de la passerelle PC (il faut en effet que les deux serveurs d'agent utilisateur (TM et TF) soient enregistrés auprès de ce dernier).

L'invention ne se limite pas aux modes de réalisation de procédé de gestion et de système de contrôle décrits ci-avant, seulement à titre d'exemple, mais elle englobe toutes les variantes que pourra envisager l'homme de l'art dans le seul cadre des revendications ci-après.

## Revendications

1. Procédé de gestion d'un appel téléphonique entrant pour un système de communication (SC) comprenant une passerelle (PC) couplée à un récepteur de contenus multimédia (RC) également couplé à un moniteur (MA) et disposant de moyens d'enregistrement (ME) propres à enregistrer un contenu en cours de réception, ledit système de communication (SC) étant en outre couplé à un téléphone fixe (TF) et/ou à un téléphone mobile (TM), **caractérisé en ce qu'**il comprend une étape dans laquelle, en cas de détection d'un appel téléphonique entrant par ledit système de communication (SC) pendant une diffusion d'un contenu par ledit moniteur (MA), on interrompt temporairement ladite diffusion tout en enregistrant avec lesdits moyens d'enregistrement (ME) la suite dudit contenu reçue par ledit système de communication (SC), et on affiche sur ledit moniteur (MA) un message proposant à un usager de ce dernier (MA) d'accepter ou de refuser ledit appel téléphonique entrant détecté, puis, en cas d'acceptation, on poursuit ledit enregistrement de la suite du contenu reçue avec lesdits moyens d'enregistrement (ME) jusqu'à ce que l'on détecte la fin dudit appel téléphonique.

2. Procédé selon la revendication 1, **caractérisé en ce que** dans ladite étape, lorsque l'on a détecté la fin de l'appel téléphonique, on affiche sur ledit moniteur (MA) un message proposant audit usager la diffusion par ce dernier (MA) de la suite du contenu en cours de réception ou de ladite suite du contenu enregistrée tout en continuant ledit enregistrement de la suite du contenu reçue.

3. Procédé selon l'une des revendications 1 et 2, **caractérisé en ce que** dans ladite étape, en cas de refus de répondre audit appel téléphonique entrant, on affiche sur ledit moniteur (MA) un message proposant audit usager la diffusion par ce dernier (MA) de la suite du contenu en cours de réception ou de ladite suite du contenu enregistrée tout en continuant ledit enregistrement de la suite du contenu reçue.

4. Procédé selon l'une des revendications 1 à 3, **caractérisé en ce que** dans ladite étape ledit système de communication (SC) considère que ledit usager accepte l'appel téléphonique entrant lorsqu'il a sélectionné une zone d'acceptation affichée sur ledit moniteur (MA) au moyen d'une télécommande (TR) associée audit récepteur de contenus multimédia (RC) ou une touche dédiée de ladite télécommande (TR) ou qu'il a pris ledit appel téléphonique entrant au moyen du téléphone fixe (TF) ou mobile (TM) ayant reçu ce dernier.

5. Procédé selon la revendication 4, **caractérisé en ce que** dans ladite étape, lorsque ledit usager accepte l'appel téléphonique entrant au moyen de ladite télécommande (TR), on diffuse les sons issus dudit téléphone fixe (TF) ou mobile (TM) au moyen dudit moniteur (MA) ou d'un périphérique audio rattaché audit moniteur (MA) et on capte les sons émis par ledit usager avec un microphone de ladite télécommande (TR) afin de les transférer vers ledit téléphone fixe (TF) ou mobile (TM).

6. Système de communication (SC) comprenant une passerelle (PC) couplée à un récepteur de contenus multimédia (RC) propre à être couplé à un moniteur (MA) et comportant des moyens d'enregistrement (ME) propres à enregistrer un contenu en cours de réception, ledit système de communication (SC) étant en outre propre à être couplé à un téléphone fixe (TF) et/ou à un téléphone mobile (TM), **caractérisé en ce qu'**il comprend des moyens de contrôle (MC) agencés, en cas de détection d'un appel téléphonique entrant par ledit système de communication (SC) pendant une diffusion d'un contenu par ledit moniteur (MA), pour déclencher une interruption temporaire de ladite diffusion et un enregistrement par lesdits moyens d'enregistrement (ME) de la suite dudit contenu reçue par ledit système de communication (SC), et pour déclencher un affichage sur ledit moniteur (MA) d'un message proposant à un usager de ce dernier (MA) d'accepter ou de refuser ledit appel téléphonique entrant détecté, puis, en cas d'acceptation, pour imposer une poursuite dudit enregistrement de la suite du contenu reçue par lesdits moyens d'enregistrement (ME) jusqu'à une détection de fin dudit appel téléphonique.

7. Système selon la revendication 6, **caractérisé en ce que** lesdits moyens de contrôle (MC) sont agencés, lorsqu'une fin de l'appel téléphonique a été détectée, pour déclencher un affichage sur ledit moniteur (MA) d'un message proposant audit usager la diffusion par ce dernier (MA) de la suite du contenu en cours de réception ou de ladite suite du contenu enregistrée tout en imposant une poursuite dudit enregistrement de la suite du contenu reçue.

8. Système selon l'une des revendications 6 et 7, **caractérisé en ce que** lesdits moyens de contrôle (MC) sont agencés, en cas de refus de répondre audit appel téléphonique entrant, pour déclencher un affichage sur ledit moniteur (MA) d'un message proposant audit usager la diffusion par ce dernier (MA) de la suite du contenu en cours de réception ou de ladite suite du contenu enregistrée tout en imposant une poursuite dudit enregistrement de la suite du contenu reçue.

9. Système selon l'une des revendications 6 à 8, **caractérisé en ce qu'**il comprend une télécommande (TR) associée audit récepteur de contenus multimédia (RC), et **en ce que** lesdits moyens de contrôle (MC) sont agencés pour considérer que ledit usager accepte l'appel téléphonique entrant lorsqu'il a sélectionné une zone d'acceptation affichée sur ledit moniteur (MA) au moyen de ladite télécommande (TR) ou une touche dédiée de ladite télécommande (TR) ou qu'il a pris ledit appel téléphonique entrant au moyen du téléphone fixe (TF) ou mobile (TM) ayant reçu ce dernier.

10. Système selon la revendication 9, **caractérisé en ce que** ladite télécommande (TR) comprend un microphone propre à capter des sons émis par ledit usager, et **en ce que** lesdits moyens de contrôle (MC) sont agencés, lorsque ledit usager a accepté l'appel téléphonique entrant au moyen de ladite télécommande (TR), pour contrôler la diffusion des sons issus dudit téléphone fixe (TF) ou mobile (TM) au moyen dudit moniteur (MA) ou d'un périphérique audio rattaché audit moniteur (MA) et le transfert vers ledit téléphone fixe (TF) ou mobile (TM) des sons captés par ledit microphone.

11. Système selon l'une des revendications 6 à 10, **caractérisé en ce que** ladite passerelle (PC) et ledit récepteur de contenus multimédia (RC) font partie d'un même appareil propre à être couplé audit moniteur (MA) et audit téléphone fixe (TF) et/ou audit téléphone mobile (TM).

12. Système selon l'une des revendications 6 à 10, **caractérisé en ce que** ladite passerelle (PC) est couplée audit récepteur de contenus multimédia (RC) via une liaison filaire ou non filaire et propre à être couplée audit téléphone fixe (TF), et ledit récepteur de contenus multimédia (RC) étant propre à être couplé audit moniteur (MA) et audit téléphone mobile (TM).

13. Système selon l'une des revendications 6 à 12, **caractérisé en ce que** lesdits moyens de contrôle (MC) font partie dudit récepteur de contenus multimédia (RC).

14. Récepteur de contenus multimédia (RC), d'une part, propre à être couplé à un téléphone mobile (TM), un moniteur (MA) et une passerelle (PC) propre à être couplée à un téléphone fixe (TF), et, d'autre part, comportant des moyens d'enregistrement (ME) propres à enregistrer un contenu en cours de réception, **caractérisé en ce qu'**il comprend des moyens de contrôle (MC) agencés, en cas de détection d'un appel téléphonique entrant reçu par ledit téléphone mobile (TM) ou ledit téléphone fixe (TF) pendant une diffusion d'un contenu par ledit moniteur (MA), pour déclencher une interruption temporaire de ladite diffusion et un enregistrement par lesdits moyens d'enregistrement (ME) de la suite dudit contenu reçue, et pour déclencher un affichage sur ledit moniteur (MA) d'un message proposant à un usager de ce dernier (MA) d'accepter ou de refuser ledit appel téléphonique entrant détecté, puis, en cas d'acceptation, pour imposer une poursuite dudit enregistrement de la suite du contenu reçue par lesdits moyens d'enregistrement (ME) jusqu'à une détection de fin dudit appel téléphonique.

15. Produit programme d'ordinateur comprenant des instructions qui, lorsque le programme est exécuté par un ordinateur, conduisent celui-ci à mettre en œuvre les étapes du procédé selon l'une des revendications 1 à 5.

16. Support d'enregistrement non transitoire lisible par ordinateur comprenant des instructions qui, lorsqu'elles sont exécutées par un ordinateur, conduisent celui-ci à mettre en œuvre les étapes du procédé selon l'une des revendications 1 à 5.

## Patentansprüche

1. Verwaltungsverfahren eines eingehenden Telefonanrufs für ein Kommunikationssystem (SC), umfassend eine Brücke (PC), die an einen Empfänger von Multimedien-Content (RC) gekoppelt ist, der ebenfalls an einen Bildschirm (MA) gekoppelt ist und über eigene Speichermittel (ME) verfügt, die geeignet sind, einen Content während der Aufnahme zu speichern, wobei das genannte Kommunikationsmittel (SC) darüber hinaus an ein Festnetz-Telefon (TF) und / oder an ein Mobiltelefon (TM) gekoppelt ist, **dadurch gekennzeichnet, dass** es einen Schritt umfasst, bei dem bei Erkennen eines eingehenden Telefonanrufs durch das genannte Kommunikationssystem (SC) während einer Sendung eines Contents von dem genannten Bildschirm (MA) die genannte Sendung vorübergehend unterbrochen wird, während gleichzeitig mit den genannten Speichermitteln (ME) die Folge des genannten, von dem genannten Kommunikationssystem (SC) empfangene Contents gespeichert wird und auf dem genannten Bildschirm (MA) eine Nachricht angezeigt wird, die einem Nutzer desselben (MA) vorschlägt, den genannten erkannten eingehenden Telefonanruf anzunehmen oder abzulehnen, dann bei einer Annahme das genannte Speichern der Folge des empfangenen Contents mit den genannten Speichermitteln (ME) fortgesetzt wird, bis das Ende des genannten Telefonanrufs erkannt wird.

2. Verfahren gemäß Anspruch 1, **dadurch gekennzeichnet, dass** bei dem genannten Schritt, wenn das Ende des Telefonanrufs erkannt wird, auf dem genannten Bildschirm (MA) eine Nachricht angezeigt wird, die dem genannten Nutzer das Senden der Folge des Contents während des Empfangs oder der Folge des gespeicherten Contents durch diesen (MA) bei gleichzeitiger Fortsetzung der genannten Speicherung der Folge des empfangenen Contents vorschlägt.

3. Verfahren gemäß einem der Ansprüche 1 und 2, **dadurch gekennzeichnet, dass** bei einer Ablehnung, den genannten eingehenden Telefonanruf zu beantworten, in dem genannten Schritt auf dem genannten Bildschirm (MA) eine Nachricht angezeigt wird, die dem genannten Nutzer die Sendung der Folge des Inhalts während des Empfangs oder der genannten Fortsetzung des gespeicherten Inhalts durch letzteren (MA) bei gleichzeitiger Fortsetzung der genannten Speicherung der Folge des empfangenen Inhalts vorschlägt.

4. Verfahren gemäß einem der Ansprüche 1 bis 3, **dadurch gekennzeichnet, dass** das genannte Kommunikationssystem (SC) bei dem genannten Schritt davon ausgeht, dass der genannte Nutzer den eingehenden Telefonanruf annimmt, wenn er einen Annahmebereich ausgewählt hat, der auf dem genannten Bildschirm (MA) mittels einer Fernbedienung (TR), die dem genannten Empfänger von Multimedien-Content (RC) zugeordnet ist, oder mittels einer dedizierten Taste der genannten Fernsteuerung (TR) angezeigt wird, oder er den genannten eingehenden Telefonanruf mittels des Festnetz-Telefons (TF) oder Mobiltelefons (TM), das letzteren empfangen hat, angenommen hat.

5. Verfahren gemäß Anspruch 4, **dadurch gekennzeichnet, dass** bei dem genannten Schritt, wenn der genannte Nutzer den eingehenden Telefonanruf mittels der genannten Fernbedienung (TR) annimmt, die Töne gesendet werden, die von dem genannten Festnetz-Telefon (TF) oder Mobiltelefon (TM) mittels des genannten Bildschirms (MA) oder von einem Audio-Peripheriegerät, das an den genannten Bildschirm (MA) angeschlossen ist, gesendet werden und die Töne, die von dem genannten Nutzer mit einem Mikrofon von der genannten Fernbedienung (TR) ausgegeben werden, erfasst, um sie auf das genannte Festnetz-Telefon (TF) oder Mobiltelefon (TM) zu übertragen.

6. Kommunikationssystem (SC), umfassend eine Brücke (PC), die an einen Empfänger von Multimedien-Content (RC) gekoppelt ist, der geeignet ist, an einen Bildschirm (MA) gekoppelt zu sein und Speichermittel (ME) umfasst, die geeignet sind, einen Content während des Empfangs zu speichern, wobei das genannte Kommunikationssystem (SC) darüber hinaus geeignet ist, an ein Festnetz-Telefon (TF) und / oder ein Mobiltelefon (TM) gekoppelt zu sein, **dadurch gekennzeichnet, dass** es Steuermittel (MC) umfasst, die geeignet sind, bei Erkennen eines eingehenden Telefonanrufs durch das genannte Kommunikationssystem (SC) während einer Sendung eines Contents durch den genannten Bildschirm (MA) eine vorübergehende Unterbrechung der genannten Sendung und ein Abspeichern der Folge des genannten, von dem genannten Kommunikationssystem (SC) empfangenen Contents durch die genannten Speichermittel (ME) auszulösen und um eine Anzeige einer Nachricht, die einem Nutzer desselben (MA) das Annehmen oder Ablehnen des genannten eingehenden erkannten Telefonanrufs auf dem genannten Bildschirm (MA) vorzuschlagen und dann bei einer Annahme eine Fortsetzung der genannten Abspeicherung der Folge des von den genannten Speichermitteln (ME) empfangenen Contents bis zum Erkennen des Endes des genannten Telefonanrufs zu erzwingen.

7. System gemäß Anspruch 6, **dadurch gekennzeichnet, dass** die genannten Steuermittel (MC) angeordnet sind, um eine Anzeige einer Nachricht, die dem genannten Nutzer das Senden der Folge des Contents während des Empfangs oder der genannten Folge des gespeicherten Contents durch letzteren (MA) vorschlägt, auf dem genannten Bildschirm (MA) auszulösen, wenn das Ende des Telefonanrufs erkannt wurde, und dabei gleichzeitig eine Fortsetzung des genannten Speicherns der Folge des empfangenen Contents zu erzwingen.

8. System gemäß irgendeinem der Ansprüche 6 und 7, **dadurch gekennzeichnet, dass** die genannten Steuermittel (MC) angeordnet sind, um bei einer Ablehnung auf den genannten eingehenden Telefonanruf zu antworten, eine Anzeige einer Nachricht auf dem genannten Bildschirm (MA) auszulösen, die dem genannten Nutzer die Sendung der Folge des Contents während des Empfangs oder der genannten Folge des gespeicherten Contents von letzteren (MA) vorzuschlagen und dabei gleichzeitig eine Fortsetzung des genannten Speicherns der Folge des empfangenen Contents zu erzwingen.

9. System gemäß einem der Ansprüche 6 bis 8, **dadurch gekennzeichnet, dass** es eine Fernbedienung (TR) umfasst, die dem genannten Empfänger von Multimedien-Content (RC) zugeordnet ist, und dass die genannten Steuermittel (MC) angeordnet sind, um davon auszugehen, dass der genannte Nutzer den eingehenden Telefonanruf annimmt, wenn er einen Annahmebereich ausgewählt hat, der auf dem genannten Bildschirm (MA) mittels der genannten Fernbedienung (TR) oder einer dedizierten Taste der genannten Fernbedienung (TR) angezeigt wird oder er den genannten eingehenden Telefonanruf mittels des Festnetz-Telefons (TF) oder Mobiltelefons (TM) angenommen hat, der Letzteren erhalten hat.

10. System gemäß Anspruch 9, **dadurch gekennzeichnet, dass** die genannte Fernbedienung (TR) ein Mikrofon umfasst, das geeignet ist, Töne zu erfassen, die von dem genannten Nutzer ausgegeben werden, und dass die genannten Steuermittel (MC) angeordnet sind, um die Sendung der Töne, die von dem genannten Festnetz-Telefon (TF) oder Mobiltelefon (TM) ausgegeben werden, mittels des genannten Bildschirms (MA) oder eines Audio-Peripheriegeräts, das an den genannten Bildschirm (MA) angeschlossen ist, zu steuern und die Übertragung der von dem genannten Mikrofon erfassten Töne auf das genannte Festnetz-Telefon (TF) oder Mobiltelefon (TM) zu steuern, wenn der genannte Nutzer den eingehenden Telefonanruf mittels der genannten Fernbedienung (TR) angenommen hat.

11. System gemäß einem der Ansprüche 6 bis 10, **dadurch gekennzeichnet,**
**dass** die genannte Brücke (PC) und der genannte Empfänger von Multimedien-Content (RC) zu einem und demselben Gerät gehören, das geeignet ist, an den genannten Bildschirm (MA) und das genannte Festnetz-Telefon (TF) und / oder das genannte Mobiltelefon (TM) gekoppelt zu sein.

12. System gemäß einem der Ansprüche 6 bis 10, **dadurch gekennzeichnet, dass** die genannte Brücke (PC) an den genannten Empfänger von Multimedien-Content (PC) über eine Verbindung mit oder ohne Draht gekoppelt ist, und geeignet ist, an das genannte Festnetztelefon (TF) gekoppelt zu sein, und das wobei der genannte Empfänger von Multimedien-Content (RC) geeignet ist, an den genannten Bildschirm (MA) und das genannte Mobiltelefon (TM) gekoppelt zu sein.

13. System gemäß einem der Ansprüche 6 bis 12, **dadurch gekennzeichnet, dass** die genannten Steuermittel (MC) Teil des genannten Empfänger von Multimedien-Contents (RC) sind.

14. Empfänger von Multimedien-Content (RC) einerseits, der geeignet ist, an ein Mobiltelefon (TM), einen Bildschirm (MA) und eine Brücke (PC) gekoppelt zu sein, die geeignet ist, an ein Festnetz-Telefon (TF) gekoppelt zu sein, und andererseits umfassend Speichermittel (ME), die geeignet sind, einen Content während des Empfangs zu speichern, **dadurch gekennzeichnet, dass** er Steuermittel (MC) umfasst, die angeordnet sind, um bei Erkennen eines eingehenden Telefonanrufs, der von dem genannten Mobiltelefon (TM) oder dem genannten Festnetz-Telefon (TF) während einer Sendung eines Contents durch den genannten Bildschirm (MA) empfangen zu werden, um eine vorübergehende Unterbrechung der genannten Sendung und ein Speichern der Folge des genannten empfangenen Contents durch die genannten Speichermittel (ME) auszulösen und um ein Anzeigen einer Nachricht auf dem genannten Bildschirm (MA) auszulösen, die einem Nutzer desselben (MA) vorschlägt, den genannten erkannten eingehenden Telefonanruf anzunehmen oder abzulehnen, dann, bei einer Annahme, um eine Fortsetzung des genannten Speicherns der Folge des Contents, der von den genannten Speichermitteln (ME) empfangen wird, bis zu einem Erkennen des genannten Telefonanrufs zu erzwingen.

15. Computer-Programmprodukt, umfassend Anweisungen, die, wenn das Programm von einem Computer ausgeführt wird, diesen dazu veranlassen, die Schritte des Verfahrens gemäß einem der Ansprüche 1 bis 5 umzusetzen.

16. Computerlesbarer, nicht transitorischer Speicherträger, umfassend Anweisungen, die, wenn sie von einem Computer ausgeführt werden, diesen veranlassen, die Schritte des Verfahrens gemäß einem der Ansprüche 1 bis 5 umzusetzen.

## Claims

1. Method for managing an incoming telephone call for a communication system (SC) comprising a gateway (PC) coupled to a multimedia content receiver (RC) also coupled to a monitor (MA) and having recording means (ME) able to record a content during reception, said communication system (SC) being furthermore coupled to a fixed telephone (TF) and/or to a mobile telephone (TM), **characterised in that** it comprises a step in which, in case of detection of an incoming telephone call by said communication system (SC) during a broadcasting of a content by said monitor (MA), said broadcasting is temporarily interrupted while still recording with said recording means (ME) the rest of the content received by said communication system (SC), and a message is displayed on said monitor (MA) prompting a user of the latter (MA) to accept or refuse said incoming telephone call detected, then, in case of acceptance, said recording of the rest of the content received is continued with said recording means (ME) until the end of said telephone call is detected.

2. Method according to claim 1, **characterised in that** in said step, when the end of a telephone call has been detected, a message is displayed on said monitor (MA) prompting said user with the broadcasting by the latter (MA) of the rest of the content being received or of said rest of the recorded content while still continuing said recording of the rest of the content received.

3. Method according to one of claims 1 and 2, **characterised in that** in said step, in case of refusal to respond to said incoming telephone call, a message is displayed on said monitor (MA) prompting said user with the broadcasting by the latter (MA) of the rest of the content being received or of said rest of the recorded content while still continuing said recording of the rest of the content received.

4. Method according to one of claims 1 to 3, **characterised in that** in said step said communication system (SC) considers that said user accepts the incoming telephone call when said user has selected an acceptance zone displayed on said monitor (MA) by means of a remote control (TR) associated with said multimedia content receiver (RC) or a dedicated button of said remote control (TR) or that said user has taken said incoming telephone call by means of the fixed telephone (TF) or mobile telephone (TM) that received the latter.

5. Method according to claim 4, **characterised in that** in said step, when said user accepts the incoming telephone call by means of said remote control (TR), the sounds coming from said fixed telephone (TF) or mobile telephone (TM) are broadcast by means of said monitor (MA) or by means of an audio peripheral device attached to said monitor (MA) and the sounds emitted by said user are captured with a microphone of said remote control (TR) so as to transfer them to said fixed telephone (TF) or mobile telephone (TM).

6. Communication system (SC) comprising a gateway (PC) coupled to a multimedia content receiver (RC) able to be coupled to a monitor (MA) and comprising recording means (ME) able to record a content during reception, said communication system (SC) further being able to be coupled to a fixed telephone (TF) and/or to a mobile telephone (TM), **characterised in that** it comprises control means (MC) arranged, in case of detection of an incoming telephone call by said communication system (SC) during a broadcasting of a content by said monitor (MA), to trigger a temporary interruption of said broadcasting and a recording by said recording means (ME) of the rest of the content received by said communication system (SC), and to trigger a displaying on said monitor (MA) of a message prompting a user of the latter (MA) to accept or refuse said incoming telephone call detected, then, in case of acceptance, to impose a continuation of said recording of the rest of the content received by said recording means (ME) until a detection of the end of said telephone call.

7. System according to claim 6, **characterised in that** said control means (MC) are arranged, when an end of the telephone call has been detected, to trigger a displaying on said monitor (MA) of a message prompting said user with the broadcasting by the latter (MA) of the rest of the content being received or of said rest of the recorded content while still imposing a continuation of said recording of the rest of the content received.

8. System according to one of claims 6 and 7, **characterised in that** said control means (MC) are arranged, in case of refusal to respond to said incoming telephone call, to trigger a displaying on said monitor (MA) of a message prompting said user with the broadcasting by the latter (MA) of the rest of the content being received or of said rest of the recorded content while still imposing a continuation of said recording of the rest of the content received.

9. System according to one of claims 6 to 8, **characterised in that** it comprises a remote control (TR) associated with said multimedia content receiver (RC), and **in that** said control means (MC) are arranged to consider that said user accepts the incoming telephone call when said user has selected an acceptance zone displayed on said monitor (MA) by means of said remote control (TR) or a dedicated button of said remote control (TR) or that said user has taken said incoming telephone call by means of the fixed telephone (TF) or mobile telephone (TM) that received the latter.

10. System according to claim 9, **characterised in that** said remote control (TR) comprises a microphone able to capture sounds emitted by said user, and **in that** said control means (MC) are arranged, when said user has accepted the incoming telephone call by means of said remote control (TR), to control the broadcasting of sounds coming from said fixed telephone (TF) or mobile telephone (TM) by means of said monitor (MA) or by means of an audio peripheral device attached to said monitor (MA) and the transferring to said fixed telephone (TF) or mobile telephone (TM) of the sounds captured by said microphone.

11. System according to one of claims 6 to 10, **characterised in that** said gateway (PC) and said multimedia content receiver (RC) are part of the same device able to be coupled to said monitor (MA) and to said fixed telephone (TF) and/or to said mobile telephone (TM).

12. System according to one of claims 6 to 10, **characterised in that** said gateway (PC) is coupled to said multimedia content receiver (RC) via a wired or wireless connection and able to be coupled to said fixed telephone (TF), and said multimedia content receiver (RC) being able to be coupled to said monitor (MA) and to said mobile telephone (TM).

13. System according to one of claims 6 to 12, **characterised in that** said control means (MC) are part of said multimedia content receiver (RC).

14. Multimedia content receiver (RC), on the one hand, able to be coupled to a mobile telephone (TM), a monitor (MA) and a gateway (PC) able to be coupled to a fixed telephone (TF), and, on the other hand, comprising recording means (ME) able to record a content during reception, **characterised in that** it comprises control means (MC) arranged, in case of detection of an incoming telephone call received by said mobile telephone (TM) or said fixed telephone (TF) during a broadcasting of a content by said monitor (MA), to trigger a temporary interruption of said broadcasting and a recording by said recording means (ME) of the rest of said content received, and to trigger a displaying on said monitor (MA) of a message prompting a user of the latter (MA) to accept or refuse said incoming telephone call detected, then, in case of acceptance, to impose a continuation of said recording of the rest of the content received by said recording means (ME) until a detection of the end of said telephone call.

15. Computer program product comprising instructions that, when the program is executed by a computer, lead the latter to implement the steps of the method according to one of claims 1 to 5.

16. Non-transitory recording medium that can be read by a computer, comprising instructions that, when they are executed by a computer, lead the latter to implement the steps of the method according to one of claims 1 to 5.
